# EUROPEAN PATENT APPLICATION

(11) **EP 2 014 886 A1**
(43) Date of publication of application: **14.01.2009**
(21) Application number: 07252744.3
(22) Date of filing: 09.07.2007
(51) Int. Cl.: F01N 3/20, B65D 77/06

(54) **Reservoir for a fluid dosing system**

(71) Applicant: Delphi Technologies, Inc., Troy, Michigan 48007 (US)
(72) Inventor: Cooke, Michael P., Gillingham Kent ME7 1DR (GB)
(74) Representative: Gregory, John David Charles

(57) **Abstract**

A reservoir (28) for holding a fluid (21) for supply to a fluid dosing device for introducing the fluid into a gas flow (3), the reservoir comprising: an outer container (32); an inner container (30) located within the outer container (32), the inner container (30) being arranged to hold the fluid (21); an outlet (36) in the outer container, the outlet being in fluid communication with the inner container; wherein the inner container is flexible.

## Description

### Technical Field

This invention relates to a reservoir for a fluid dosing system. In particular, the invention relates to a reservoir tank for holding a reducing agent for introduction by a fluid dosing device into an exhaust gas flow.

### Background to the Invention

The emission of nitrogen oxide (NOₓ) compounds in engine exhausts has long been the focus for health professionals and regulatory agencies worldwide. In many locations, regulations require stringent reductions of NOₓ levels in new equipments. NOₓ emissions may be found in a variety of systems such as internal combustion engines, gas turbine exhaust, lean burn engines, industrial boilers, process heaters or other process streams.

In order to reduce NOₓ emissions, it is known to use a Selective Catalytic Reduction (SCR) device to treat an exhaust flow and to significantly reduce nitrous oxide (NOₓ) emissions. In an SCR system a reducing agent, for example urea solution, is dosed into the exhaust gas flow upstream of an SCR catalyst. This reducing agent is then usually reacted in the presence of a catalyst downstream of the injection point in an SCR device. Within the SCR device NOₓ compounds are then reduced to nitrogen. WO2004111401 discloses such a device.

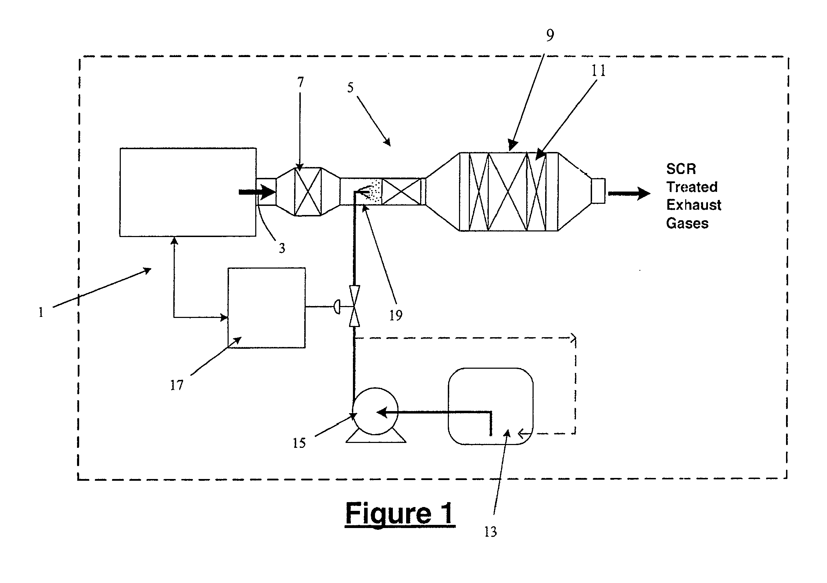

The general operation of an SCR device is shown in Figure 1, in which a diesel engine 1 produces an exhaust flow comprising various exhaust gases 3. The exhaust gases are conveyed through an exhaust system, indicated generally at 5, comprising an oxidation catalyst device 7, a selective reduction catalyst device 9 and a slip catalyst 11.

The oxidation catalyst device 7 is a flow through device that consists of a canister containing a honeycomb-like structure or substrate. The substrate has a large surface area that is coated with an active catalyst layer. This layer contains a small, well dispersed amount of precious metals such as platinum or palladium. As the exhaust gases traverse the catalyst, carbon monoxide, gaseous hydrocarbons and liquid hydrocarbon particles (unburned fuel and oil) are oxidized, thereby reducing harmful emissions.

The SCR device 9 performs Selective Catalytic Reduction (SCR) of nitrogen oxide (NOx) using ammonia (derived from a source of urea) as a chemical reductant. SCR is a proven technical and economic solution for the heavy-duty market to meet Euro IV and Euro V emission requirements for diesel-powered commercial vehicles in Europe.

The slip catalyst 11 is located downstream of the SCR device 9 to clean up any unreacted ammonia.

Urea for the SCR device 9 is stored in a tank 13 which is in fluid communication with the exhaust system 5. A pump 15 is provided to pump urea from the tank 13 to the exhaust system 5. The supply of urea is controlled by a control unit 17, for example the engine control unit, which receives engine speed and other engine parameters from the engine 1. An injection device 19 (also referred to herein as a fluid dosing device) is used to inject the urea into the exhaust flow.

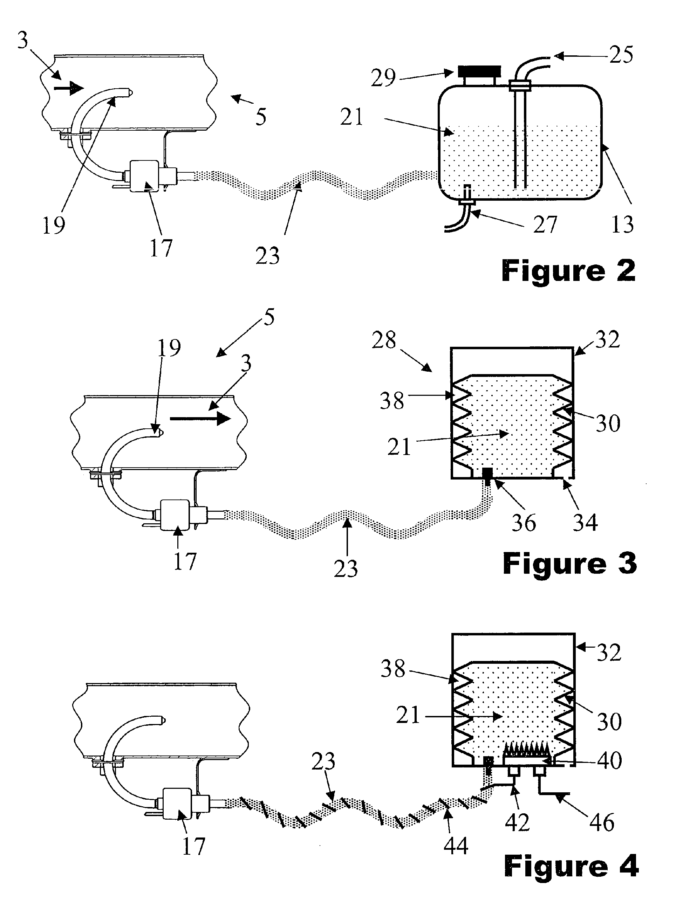

Figure 2 shows a simple known dosing system for delivering liquid reducing agent to an exhaust system 5 such as that of Figure 1 for the purpose of removing harmful gasses from the exhaust. Reducing agent 21 (e.g. 32.5% urea solution) is held in a reservoir tank 13, for delivery via a pipe 23 to a dosing unit 17 which controls delivery of the reducing agent into the exhaust 3 via a nozzle 19.

Generally the tank 13 is provided with at least a reagent level and quality sensor 25 and a temperature sensor 27. As a 32.5% urea solution freezes at -11.5°C, heaters may also be provided in the tank for use in cold climates. In order to allow the tank to empty, a vent needs to be provided to let air in, which could typically be provided in the filling cap 29. To prevent over-pressurization of the tank if this air is heated, this vent is also allowed to let air out. A problem with this arrangement is that contaminants can be sucked in and water vapour can be expelled, changing the quality and concentration of the reducing agent solution. It is also easy for the tank to be filled with the wrong fluid and, at the time of filling with the correct fluid, it is easy for contamination to get in and vapour to escape. If the fluid in the tank freezes, a substantial volume of reagent must be melted before it can flow freely, because a plug of ice will freeze to the walls of the tank. This means that if ice is melted near the outlet only and liquid is drawn out, the pressure around the outlet reduces because the ice surrounding it provides a seal. This means that it either takes a long time before the system is able to operate fully, or a large amount of heat must be used to melt a large enough volume of ice quickly.

It is therefore an object of the present invention to provide a reservoir tank for use in a dosing system for introducing a fluid to a gas flow that substantially overcomes or mitigates the above mentioned problems.

### Summary of the Invention

According to a first aspect the present invention provides a reservoir for holding a fluid for supply to a fluid dosing device for introducing the fluid into a gas flow, the reservoir comprising: an outer container; an inner container located within the outer container, the inner container being arranged to hold the fluid; an outlet in the outer container, the outlet being in fluid communication with the inner container; wherein the inner container is flexible.

The present invention provides a reservoir that may be used in the above described dosing systems in which a flexible container is located within a more rigid container.

Conveniently, the inner container may be arranged to be collapsible so that the inner container reduces in volume as fluid is moved from the reservoir to the fluid dosing device.

Conveniently, the reservoir may comprise an inlet in the outer container, the inlet being in fluid communication with the inner container, so that fluid (or replacement fluid) can be pumped into the reservoir.

The inner container may be formed from any of the following structures: a flexible bellows; bag; balloon; collapsible tube; or diaphragm. Conveniently, the inner container may be formed from one or more of the following materials: elastomers; plastics; impermeable fabrics; thin metal.

Suitably, the outer container may be arranged to be substantially rigid.

Conveniently, the inner and outer containers may be spaced apart by an air gap which acts as an insulating layer which can help delay the freezing of the fluid within the reservoir.

Suitably, the reservoir may further comprise a venting means, such as a valve or hole in the outer container, which is arranged to vent the space between the inner and outer containers.

Conveniently, a control unit (electronic control unit, ECU) or other components may be integrated into the reservoir. This advantageously makes tampering with the reservoir more difficult and means that the ECU may be re-set at the reservoir filling location rather than in situ, e.g. on a vehicle. The presence of a control unit allows integration of temperature sensing and heating functions and also allows connection to the dosing device. Therefore, conveniently, the reservoir further comprises a control unit for the reservoir located within the inner container.

Conveniently, the control unit may be arranged to sense the temperature of the fluid in the inner container. The control unit may also be arranged to control a heating unit for heating the reservoir.

Conveniently, the control unit may be in communication with a further control unit, the further control unit being arranged to control the fluid dosing device.

In order to delay freezing of fluid in the reservoir, the outer container may lined with an insulating material. Since the insulator is not in contact with the fluid within the reservoir any cheap and efficient foam or fibre may be used.

Conveniently, the reservoir may further comprise an integrated fluid dosing unit which is arranged to control the flow of fluid through the fluid dosing device.

Conveniently, the reservoir may comprise a further inlet, an "air gap fluid inlet", which is arranged to allow a further fluid, e.g. pressurised air, fuel or coolant, to be introduced into the air gap between the containers. By pressurising this further fluid the flow of fluid from the inner container through the outlet may be controlled. Furthermore, the outer container may also comprise an air gap fluid outlet arranged to allow the further fluid introduced into the air gap via the air gap fluid inlet to exit the air gap.

As an alternative embodiment to incorporating a control unit (ECU) into the reservoir, a control unit may be provided on a base plate of the reservoir and a radio frequency identification device may be located within the reservoir and be arranged to transmit environmental data to the control unit.

The reservoir may also comprise an integrated pump which is arranged to pump fluid from a source of fluid into the inner container.

Conveniently, the reservoir as discussed above, may be filled with a reducing agent for dosing an exhaust gas flow of an exhaust system.

In a second aspect of the present invention, there is provided a reservoir system comprising:
a reservoir according to the first aspect of the invention in which a further fluid may be introduced into an air gap between the inner and outer containers via an air gap fluid inlet and removed from the air gap via an air gap fluid outlet;
a further fluid flow pipe connected at one end to the reservoir via either the air gap fluid inlet or the air gap fluid outlet, the flow of the further fluid through the further fluid flow pipe arranged to be controlled by a thermostat.

Conveniently, the further fluid flow pipe may be arranged to run adjacent to, around or through a reagent pipe connecting the reservoir with the fluid dosing device. Conveniently, either a further fluid flow pipe connected to the air gap fluid inlet or a further fluid flow pipe connected to the air gap fluid outlet may be arranged to run adjacent to, around or through the reagent pipe.

The reservoir system may also further comprise an air pump to pressurise the air gap with the further fluid. The further fluid may conveniently be supplied from either a tank of fluid or a filling valve.

The reservoir system may also further comprise a tank or filling valve for supplying fluid to the inner container.

According to a third aspect of the present invention, there is provided a catalytic reduction system comprising: a fluid dosing device for introducing a fluid into a gas flow having a given flow direction; a reservoir for holding a reducing agent according to the first or second aspects of the invention, and; a reducing-agent pump for delivering reducing agent from the reservoir to the fluid dosing device

Conveniently, the catalytic reduction system may further comprise: an exhaust pipe for conveying a gas flow in a given flow direction, and; at least one selective catalytic reduction converter, said converter being located in the exhaust pipe downstream of the fluid dosing device.

The invention also extends to a vehicle comprising a catalytic reduction system as claimed in the third aspect of the invention.

### Brief Description of the Drawings

In order that the invention may be more readily understood, reference will now be made, by way of example only, to the accompanying drawings in which:
Figure 1 depicts a known Selective Catalytic Reduction (SCR) device;
Figure 2 shows a known reservoir tank for use in the known SCR device of Figure 1;
Figure 3 shows a reservoir tank in accordance with a first embodiment of the present invention;
Figure 4 shows a reservoir tank in accordance with a second embodiment of the present invention;
Figure 5 shows a reservoir tank in accordance with a third embodiment of the present invention;
Figure 6 shows a reservoir tank in accordance with a fourth embodiment of the present invention;
Figure 7 shows a reservoir tank in accordance with a fifth embodiment of the present invention;
Figure 8 shows a reservoir tank in accordance with a sixth embodiment of the present invention;
Figure 9 shows a reservoir tank in accordance with a seventh embodiment of the present invention;
Figure 10 shows a reservoir tank in accordance with a eighth embodiment of the present invention;
Figure 11 shows a reservoir tank in accordance with a ninth embodiment of the present invention;
Figure 12 shows a reservoir tank in accordance with a tenth embodiment of the present invention; and
Figure 13 shows a reservoir tank in accordance with a eleventh embodiment of the present invention.

### Detailed Description of Preferred Embodiments

It is noted that like numerals are used to denote like features throughout the Figures.

A reservoir tank, generally indicated as 28, in accordance with a first embodiment of the present invention is shown in Figure 3.

A reducing agent 21 is contained within a flexible member/container 30 such as a bellows, bag, balloon, collapsible tube, or diaphragm. Suitable materials for the flexible member comprise elastomers, plastics, impermeable fabrics etc. or in the case of a bellows, even thin metal may be used.

The flexible member is held within a more rigid outer container 32 and the space between the flexible member (the inner container) and the outer container is vented either by a simple hole 34 or via a valve. If a valve is provided, it may be used to control the pressure, or to prevent re-filling of the container except by authorized re-fillers (in order to ensure reagent quality).

A reagent outlet 36 is provided, which may include a self sealing connection and/or a one way valve to prevent re-filling except by authorized re-fillers.

If the reagent quality and quantity is ensured at the filling stage, then urea level and quality sensors are not required. Instead a command could be fed into an electronic control unit (ECU) when the container is fitted. In this way the ECU is able to tell that it has a full container with a known quantity of reagent. Since the urea system is sealed, the reagent quality cannot change. Therefore, since the ECU knows how much reagent it is delivering from the reservoir tank, it simply has to subtract the delivered quantity from that of a full container to know the level within the reservoir tank.

An additional advantage of the arrangement according to the first embodiment of the present invention is that an air gap 38 may be provided between the walls of the inner and outer containers which can act as an insulating layer, to delay freezing of the reagent solution so that a long period of cold is needed before thawing measures are needed. This may remove the need for heating to be provided in many climates where it only drops below the freezing point of the reagent at night. Also as the system is sealed, it is possible to place it inside a vehicle where it can benefit from the additional insulation of the cabin from the external environment and the heat from the vehicle's cabin heating system.

Figure 4 shows a second embodiment of the present invention in which an ECU 40 and/or a set of other components may be integrated into the reservoir tank. This has additional advantages in that tampering with the container is more difficult and that the ECU may be re-set at the container filling location rather than needing to be done when the container is fitted to the vehicle.

The embodiment of Figure 4 also allows integration of functions such as temperature sensing, heating, connections 42 to the dosing unit 17 and/or pipe heaters 44 and connections 46 to the vehicle ECU and/or other sensors to be integrated into one unit, minimizing the number of electrical connections and amount of wiring loom required.

The provision of a heating means at the bottom of a flexible container means that only the ice at the bottom needs to be melted because the inner container is free to drop down to fill the delivered volume even if the top has solid ice in it. For ease of fitting, all the electrical and fluid connections may be made to engage simultaneously in one connector when the reservoir tank is fitted to the vehicle. Exchange units could then be sold cheaply provided that the old unit is returned to the filler. This would minimize waste of materials as there would be a large incentive to re-use the reservoir tanks.

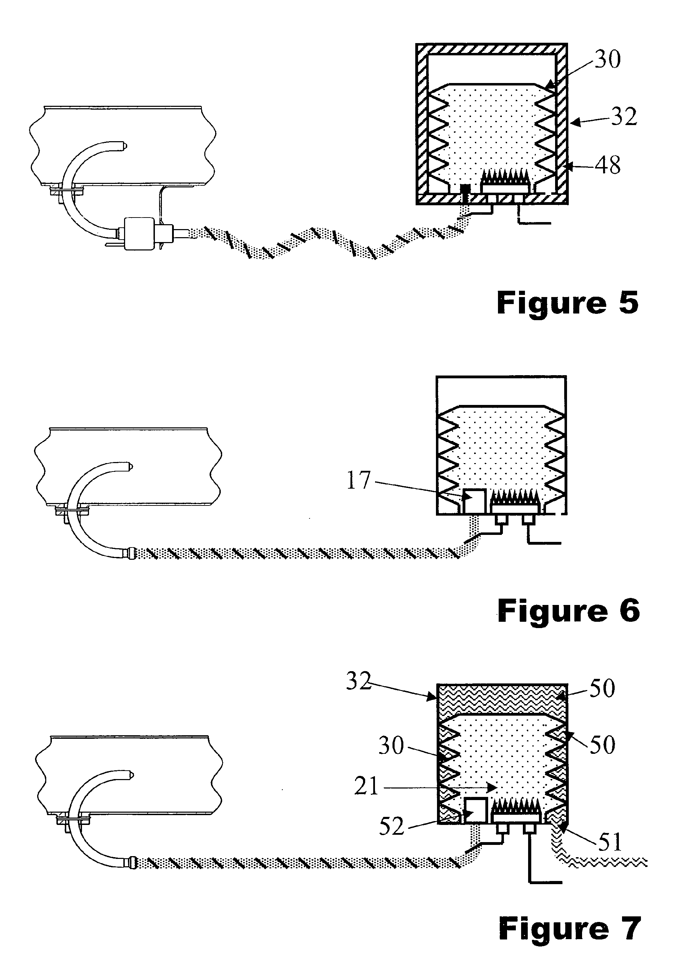

Figure 5 shows a third embodiment of the present invention in which the outer container 32 is lined with insulation 48. Since the reagent is held within the flexible member the insulation does not need to be reagent proof and may therefore be a cheap and efficient foam or fibre. As well as reducing the likelihood of freezing and reducing the time to thaw, the insulation may also advantageously minimize any noise radiated if lumps of ice knock against the walls of the flexile member 30. The insulation may also provide space for ice within the inner container 30 to expand without applying additional stresses to the outer container 32.

Figure 6 shows a fourth embodiment of the present invention in which a dosing unit 17 has been integrated within the container.

Figure 7 shows a fifth embodiment of the present invention in which a fluid 50 may be introduced between the two containers via an inlet 51 (air gap fluid inlet) in the outer container. This fluid could for example be pressurized air from a turbocharger or from a braking system, pressurized fuel from a low pressure circuit of a fuel injection system, or pressurized coolant from a vehicle cooling system. A special air pump may also be provided to pressurize this space. This has the advantage that only a dosing valve 52 needs to be exposed to the reagent rather than the pump.

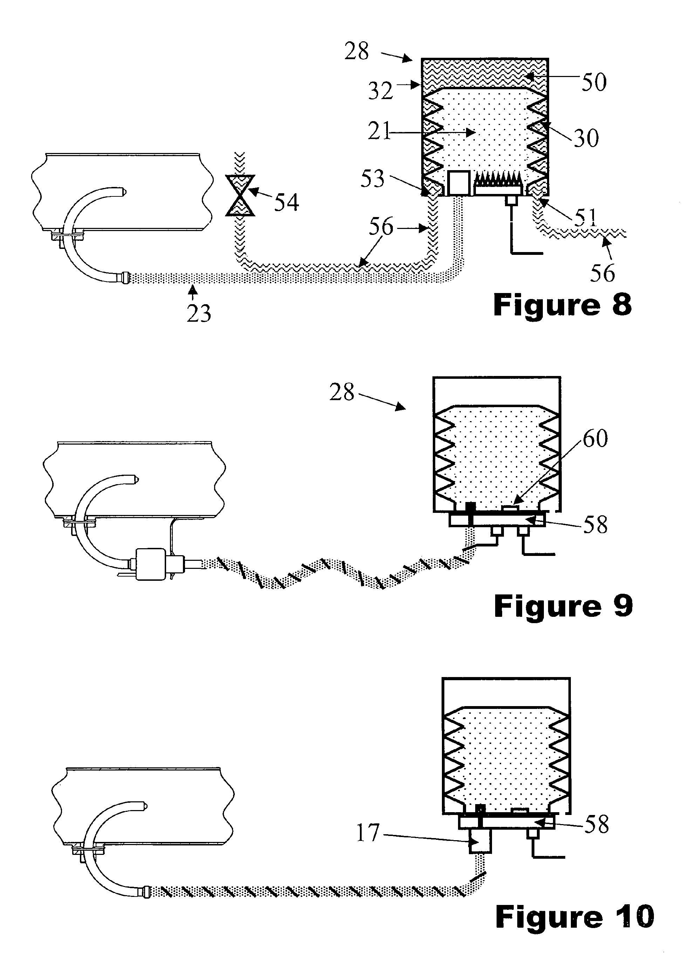

Figure 8 shows a sixth embodiment of the present invention which is a variation of the fifth embodiment of the present invention. In Figure 8, a through flow of fluid 50 through the space has been arranged. In this case, heat from the fluid (e.g. engine coolant) can be used to melt frozen reagent. A valve or thermostat 54, connected to the reservoir tank 28 by pipe 56, may be used to control this flow to only heat the reagent when required. The flow pipe 56 may be run adjacent to around, or through the reagent pipe 23 in order to thaw that pipe 23 as well. Fluid 50 enters the space between the inner and outer containers via inlet 51 and exits via outlet 53 (air gap fluid outlet).

Figure 9 shows a seventh embodiment of the present invention. As shown in Figure 9, any or all of the functions mentioned for Figure 5 may be introduced into a base plate 58 to which the container 28 is mounted. This has the advantage that the most expensive and fragile parts remain attached to the vehicle. In order for the ECU to verify the quality and/or quantity in the container, a radio frequency identification tag 60 may be provided in or on the reservoir tank 28. This may be a simple fusible tag as used for security at retail outlets or may contain a chip to register data such as the quantity of reagent remaining and/or the reagent type or age. In the case of a fusible tag, this could be fused by the ECU when the container is fitted so that the container cannot be re-used unless filled by an authorized filler and then fitted with a new tag. The tag may also be directly electrically connected or read, written to or deleted by the ECU using optical, thermal, magnetic or ultrasonic means.

Figure 10 shows an eighth embodiment of the present invention which is similar to the embodiment shown in Figure 9. As shown in Figure 10, however, the base plate 58 may also have an integrated dosing unit 17.

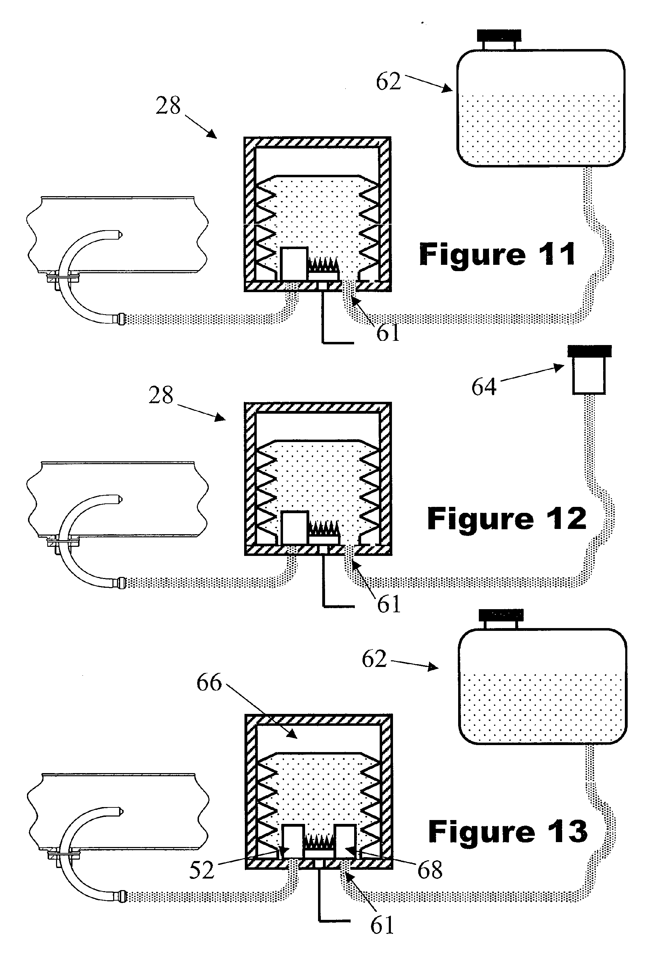

Figure 11 shows a ninth embodiment of the present invention. As shown in Figure 11, the system comprises a reservoir tank 28 and a further tank 62 which is in fluid communication with the tank 28 via inlet 61. It is noted that the reservoir tank may be a reservoir tank according to any of embodiments one to eight.

The arrangement of Figure 11 may be used when it is desired to allow filling with reagent from any source and/or when there is not a suitable space in the vehicle to fit a removable container. In this case quality, temperature and/or level sensors may be located in the further tank and/or the container or base plate. A further advantage of this system is that the reservoir tank 28 can be small and quickly unfrozen as it only needs to contain a small quantity of reagent. The further tank 62 can be allowed to freeze, as it only needs to unfreeze at sufficient intervals to re-fill the reservoir tank.

Figure 12 shows a tenth embodiment of the present invention which is similar to that of Figure 11. If there is space to fit a large enough reservoir tank, but it cannot be easily removed, the arrangement of Figure 12 may be used, where a sealed filler cap 64 or filling valve is located at a convenient point on the vehicle.

Figure 13 shows an eleventh embodiment of the present invention in which a pressurized gas or vapour 66 is sealed between the inner 30 and outer containers 32. A pressurizing pump 68 is used to pump fluid into the reservoir tank and a dosing valve 52 is used to deliver it. This has the advantage that the pump can be operated at any time (e.g. when any noise would not be heard), and the store of pre-pressurized reagent can be used at any time. Alternatively a simple filling valve could be used on the inlet and the reservoir tank pre-pressurized when it is filled.

It will be appreciated that many combinations of the described features other than those illustrated in the Figures are possible. For example any of the above embodiments can be with or without insulation and most of them can have the dosing unit at any location.

In all of the above described embodiments in which the space between inner and outer containers is not pressurised, a pressure sensor may be used to detect the reagent level. The regent level within the container may also be detected by bouncing ultrasonic pulses from the bottom to the top of the inner container and measuring the time for them to return. By analysis of the spectrum of the return pulses, it may also be possible to detect the density (and therefore strength) of the reducing agent. The reagent level and quality may also be measured by an electrical resistance or capacitance through the fluid in the inner container from the top to the bottom.

It will be understood by those who practice the invention and those skilled in the art, that various modifications and improvements may be made to the invention without departing from the scope of the invention, as defined by the claims.

## Claims

1. A reservoir (28) for holding a fluid (21) for supply to a fluid dosing device (19) for introducing the fluid into a gas flow, the reservoir comprising:
an outer container (32);
an inner container (30) located within the outer container, the inner container being arranged to hold the fluid;
an outlet (36) in the outer container, the outlet being in fluid communication with the inner container;
wherein the inner container is flexible.

2. A reservoir as claimed in Claim 1, wherein the inner container is arranged to be collapsible.

3. A reservoir as claimed in Claim 1 or Claim 2, wherein the reservoir (28) comprises an inlet (61) in the outer container (32), the inlet being in fluid communication with the inner container (30).

4. A reservoir as claimed in any preceding claim, wherein the inner container is selected from one of: a flexible bellows; bag; balloon; collapsible tube; or diaphragm.

5. A reservoir as claimed in any preceding claim, wherein the inner container is formed from one or more of the following materials: elastomers; plastics; impermeable fabrics; thin metal.

6. A reservoir as claimed in any preceding claim, wherein the outer container is substantially rigid.

7. A reservoir as claimed in any preceding claim, wherein the inner and outer containers are spaced apart by an air gap (38).

8. A reservoir as claimed in Claim 7, further comprising venting means (34) arranged to vent the space between the inner (30) and outer (32) containers.

9. A reservoir as claimed in any preceding claim, further comprising a control unit (40) for the reservoir located within the inner container.

10. A reservoir as claimed in Claim 9, wherein the control unit is arranged to sense the temperature of the fluid in the inner container.

11. A reservoir as claimed in Claim 9 or 10, wherein the control unit is arranged to control a heating unit (44) for heating the reservoir.

12. A reservoir as claimed in any of Claims 9 to 11, wherein the control unit is arranged to be in communication with a further control unit, the further control unit being arranged to control the fluid dosing device.

13. A reservoir as claimed in any preceding claim, wherein the outer container is lined with an insulating material (48).

14. A reservoir as claimed in Claim 13, wherein the insulating material (48) comprises foam or fibre insulating material.

15. A reservoir as claimed in any preceding claim, further comprising a dosing unit (17) arranged to control the flow of fluid through the fluid dosing device.

16. A reservoir as claimed in any preceding claim, wherein the outer container comprises an air gap fluid inlet (51) arranged to allow a further fluid (50) to be introduced to an air gap (38) between the inner and outer containers.

17. A reservoir as claimed in Claim 16, wherein the outer container comprises an air gap fluid outlet (53) arranged to allow the further fluid introduced into the air gap via the air gap fluid inlet (51) to exit the air gap.

18. A reservoir as claimed in Claim 16 or Claim 17, further comprising an air pump to pressurise the air gap with the further fluid.

19. A reservoir as claimed in any preceding claim, further comprising a radio frequency identification device (60) arranged to transmit environmental data to a control unit.

20. A reservoir as claimed in any preceding claim, further comprising a pump (68) which is arranged to pump fluid through the inlet into the inner container.

21. A reservoir as claimed in any preceding claim, wherein the fluid (21) is a reducing agent.

22. A reservoir system comprising:
a reservoir (28) as claimed in any one of Claims 16 to 18, and;
a further fluid flow pipe (56) connected at one end to the reservoir via either the air gap fluid inlet (51) or the air gap fluid outlet (53), the flow of the further fluid through the further fluid flow pipe (56) arranged to be controlled by a thermostat (54).

23. A reservoir system as claimed in Claim 22, wherein the further fluid flow pipe (56) is arranged to run adjacent to, around or through a reagent pipe (23) connecting the reservoir (28) with the fluid dosing device (19).

24. A reservoir system as claimed in any of Claims 21 to 23, further comprising a source of further fluid and wherein the inlet (51) is arranged to be in fluid communication with the source of further fluid.

25. A reservoir system as claimed in any of Claims 21 to 23, wherein the reservoir (28) comprises an inlet (61) in the outer container (32), the inlet being in fluid communication with the inner container (30) and in fluid communication with a further tank (62) or a filling valve (64).

26. A catalytic reduction system comprising
a fluid dosing device (19) for introducing a fluid into a gas flow having a given flow direction;
a reservoir (28) for holding a reducing agent according to any one of Claims 1 to 20 or a reservoir system according to any one of Claims 21 to 25, and;
a reducing-agent pump (15) for delivering reducing agent from the reservoir to the fluid dosing device

27. A catalytic reduction system as claimed in Claim 26, further comprising:
an exhaust pipe (5) for conveying a gas flow in a given flow direction, and;
at least one selective catalytic reduction converter (9), said converter being located in the exhaust pipe downstream of the fluid dosing device.

28. A vehicle comprising a catalytic reduction system as claimed in Claim 27.

## Amended claims

### Amended claims in accordance with Rule 137(2) EPC.

**1.** A reservoir (28) for holding a fluid (21) for supply to a fluid dosing device (19) for introducing the fluid into a gas flow, the reservoir comprising:
an outer container (32);
an inner container (30) located within the outer container, the inner container being arranged to hold the fluid;
an outlet (36) in the outer container, the outlet being in fluid communication with the inner container; and
a control unit (40) for the reservoir located within the inner container;
wherein the inner container is flexible.

**2.** A reservoir as claimed in Claim 1, wherein the inner container is arranged to be collapsible.

**3.** A reservoir as claimed in Claim 1 or Claim 2, wherein the reservoir (28) comprises an inlet (61) in the outer container (32), the inlet being in fluid communication with the inner container (30).

**4.** A reservoir as claimed in any preceding claim, wherein the inner container is selected from one of: a flexible bellows; bag; balloon; collapsible tube; or diaphragm.

**5.** A reservoir as claimed in any preceding claim, wherein the inner container is formed from one or more of the following materials: elastomers; plastics; impermeable fabrics; thin metal.

**6.** A reservoir as claimed in any preceding claim, wherein the outer container is substantially rigid.

**7.** A reservoir as claimed in any preceding claim, wherein the inner and outer containers are spaced apart by an air gap (38).

**8.** A reservoir as claimed in Claim 7, further comprising venting means (34) arranged to vent the space between the inner (30) and outer (32) containers.

**9.** A reservoir as claimed in any preceding claim, wherein the control unit is arranged to sense the temperature of the fluid in the inner container.

**10.** A reservoir as claimed in Claim 9, wherein the control unit is arranged to control a heating unit (44) for heating the reservoir.

**11.** A reservoir as claimed in Claim 9 or Claim 10, wherein the control unit is arranged to be in communication with a further control unit, the further control unit being arranged to control the fluid dosing device.

**12.** A reservoir as claimed in any preceding claim, wherein the outer container is lined with an insulating material (48).

**13.** A reservoir as claimed in Claim 12, wherein the insulating material (48) comprises foam or fibre insulating material.

**14.** A reservoir as claimed in any preceding claim, further comprising a dosing unit (17) arranged to control the flow of fluid through the fluid dosing device.

**15.** A reservoir as claimed in any preceding claim, wherein the outer container comprises an air gap fluid inlet (51) arranged to allow a further fluid (50) to be introduced to an air gap (38) between the inner and outer containers.

**16.** A reservoir as claimed in Claim 15, wherein the outer container comprises an air gap fluid outlet (53) arranged to allow the further fluid introduced into the air gap via the air gap fluid inlet (51) to exit the air gap.

**17.** A reservoir as claimed in Claim 15 or Claim 16, further comprising an air pump to pressurise the air gap with the further fluid.

**18.** A reservoir as claimed in any preceding claim, further comprising a radio frequency identification device (60) arranged to transmit environmental data to a control unit.

**19.** A reservoir as claimed in any preceding claim, further comprising a pump (68) which is arranged to pump fluid through the inlet into the inner container.

**20.** A reservoir as claimed in any preceding claim, wherein the fluid (21) is a reducing agent.

**21.** A reservoir system comprising:
a reservoir (28) as claimed in any one of Claims 15 to 17, and;
a further fluid flow pipe (56) connected at one end to the reservoir via either the air gap fluid inlet (51) or the air gap fluid outlet (53), the flow of the further fluid through the further fluid flow pipe (56) arranged to be controlled by a thermostat (54).

**22.** A reservoir system as claimed in Claim 21, wherein the further fluid flow pipe (56) is arranged to run adjacent to, around or through a reagent pipe (23) connecting the reservoir (28) with the fluid dosing device (19).

**23.** A reservoir system as claimed in Claim 21 or Claim 22, further comprising a source of further fluid and wherein the inlet (51) is arranged to be in fluid communication with the source of further fluid.

**24.** A reservoir system as claimed in Claim 21 or Claim 22, wherein the reservoir (28) comprises an inlet (61) in the outer container (32), the inlet being in fluid communication with the inner container (30) and in fluid communication with a further tank (62) or a filling valve (64).

**25.** A catalytic reduction system comprising
a fluid dosing device (19) for introducing a fluid into a gas flow having a given flow direction;
a reservoir (28) for holding a reducing agent according to any one of Claims 1 to 20 or a reservoir system according to any one of Claims 21 to 24, and;
a reducing-agent pump (15) for delivering reducing agent from the reservoir to the fluid dosing device

**26.** A catalytic reduction system as claimed in Claim 25, further comprising:
an exhaust pipe (5) for conveying a gas flow in a given flow direction, and;
at least one selective catalytic reduction converter (9), said converter being located in the exhaust pipe downstream of the fluid dosing device.

**27.** A vehicle comprising a catalytic reduction system as claimed in Claim 26.
